(19)

Europäisches
Patentamt
European
Patent Office
Office européen
des brevets

(11) **EP 4 432 176 A1**

(12) # EUROPEAN PATENT APPLICATION

(43) Date of publication:
**18.09.2024 Bulletin 2024/38**

(21) Application number: **24162774.4**

(22) Date of filing: **11.03.2024**

(51) International Patent Classification (IPC):
**G06Q 10/00** (2023.01)   **G06Q 10/047** (2023.01)
**G06Q 10/08** (2024.01)   **G06Q 10/087** (2023.01)
**G06Q 10/0875** (2023.01)

(52) Cooperative Patent Classification (CPC):
**G06Q 10/00; G06Q 10/047; G06Q 10/08;
G06Q 10/087; G06Q 10/0875**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.03.2023 SE 2350276**

(71) Applicant: **Optiplan Innovation AB
602 33 Norrköping (SE)**

(72) Inventor: **RAZMARA, Reza
177 60 Järfälla (SE)**

(74) Representative: **Ström & Gulliksson AB
Box 5275
102 46 Stockholm (SE)**

(54) **OPTIMISATION OF ORDER ITEM PICKING**

(57) A computer-implemented method for determining a picking route for order items, comprising receiving a plurality of orders, each order comprising one or more order items, generating a network representing the locations of order items by generating a plurality of nodes representing locations of order items, each node corresponding to a shelf, and generating directional links between each node, determining a distance measure between each pair of orders, determining one or more batches based on the determined distance measure, each batch comprising two or more orders, and determining a picking route for each batch based on parameters of the order items in the batch.

400

**FIG. 4**

**Description**

**Field**

This disclosure generally relates to the field of order item picking. In particular, the disclosure relates to methods for determining a picking route for retrieving order items in a storage facility.

**Background**

Storage facilities such as warehouses can be large buildings designed to securely store goods over extended periods. These buildings often have straightforward design and offer a controlled environment for efficient inventory management. Warehouses are integral to supply chain management, enabling businesses to optimize inventory levels and enhance operational efficiency by serving as a centralized hub for receiving, sorting, storing and distributing goods.

Order item picking refers to the process where individual order items (also referred to as stock keeping units or SKUs) in a warehouse or other storage facility are picked by one or more pickers to satisfy a number of orders and their constraints. The picker loads the order items into one or more boxes as they move around the storage facility. The picked orders are then transferred to a delivery vehicle, e.g. a truck, for distribution/delivery.

Determining a good picking strategy is of great importance as poor picking strategies can lead to large inefficiencies in the picking process. The optimal picking strategy can depend on a number of different factors, such as storage facility size and layout, availability of picking resources, the number of items in stock, the quantity and frequency of received orders, delivery limitations and the like.

Current order item picking strategies attempt to determine an optimal picking route based on individual order items that are present in the orders that are received. For example, a route may be filled with orders sequentially and then optimised. Whilst this may initially find an advantageous picking route, later solutions may be less optimal, and determining routes requires significant computational power.

**Summary**

This invention attempts to solve the problems noted above by providing a generally two-phase picking process. In the first phase, orders are divided into one or more batches based on a calculated distance between orders. This can be achieved by the provision of a network representing a storage facility. The batches may be determined based on factors associated with the orders themselves and factors associated with picking the batch. In some examples, the batches can be determined using a metaheuristic approach to optimise the batching process further. In the second phase, route optimisation is performed on each batch in order to determine a picking route for the entire batch considering all order items in the batch.

Taking this approach drastically reduces the computing resources required to determine an appropriate picking route for a set of orders, as batches are determined without needing to optimise routes for individual orders. By considering which orders should be picked together, processing orders simultaneously in a batching process, and optionally applying a metaheuristic to the initial solution, a good overall solution is provided. Furthermore, a solution can be provided regardless of the topology in the storage facility.

According to a first aspect of the disclosure, there is provided a computer-implemented method for determining a picking route for order items, comprising receiving a plurality of orders, each order comprising one or more order items, generating a network representing the locations of order items by generating a plurality of nodes representing locations of order items, each node corresponding to a shelf, and generating directional links between each node, determining a distance measure between each pair or orders based on the network, determining one or more batches based on the determined distance measure, each batch comprising two or more orders, and determining a picking route for each batch based on parameters of the order items in the batch.

Optionally, a directional link between a pair of nodes represents a path that can be travelled by a picker between the pair of nodes.

Optionally, determining the distance measure comprises, for each pair of orders comprising a first order and a second order determining the minimum distance from each node in the first order to a node in the second order based on the generated directional links, calculating the sum of the minimum distances, and dividing the sum of the minimum distances by the number of shelves associated with the first order.

Optionally, the method further comprises determining an optimal picking sequence for each order based on the network.

Optionally, determining a batch comprises selecting an order to be added to the batch, and determining a cost associated with adding the order to the batch.

Optionally, the cost is determined based on a cost of each order in the batch and a cost for picking the batch.

Optionally, the method comprises adding one or more orders to each batch until the maximum weight or volume capacity for picking equipment and/or a maximum time for picking the batch is reached.

Optionally, the method comprises adding one or more orders to each batch until the cost of the batch reaches a threshold.

Optionally, the method comprises adding an order to a batch in a sequential manner or in a parallel manner.

Optionally, the method comprises determining one or more first batches based on the determined distance measure, determining one or more second batches based on the one or more first batches using at least one metaheuristic, and determining a picking route for each second batch based on parameters of the order items in the batch.

Optionally, the at least one metaheuristic comprises a simulated annealing algorithm and/or a greedy randomized adaptive search procedure.

Optionally, determining one or more second batches based on the one or more first batches using at least one metaheuristic comprises adding or removing one or more orders from a batch based on a cost associated with the batch.

Optionally, determining a picking route for each batch comprises solving a sequence problem, for example a Minimum Spanning Tree or a Travelling Salesman Problem.

According to a second aspect of the disclosure, there is provided a computer-implemented method for determining a picking route for order items, comprising receiving a plurality of orders, each order comprising one or more order items, determining a distance measure between each order, determining one or more first batches based on the determined distance measure, determining one or more second batches based on the one or more first batches using at least one metaheuristic, determining a picking route for each second batch based on parameters of the order items in the batch.

According to a third aspect of the disclosure, there is provided a computer-readable medium having stored thereon instructions that, when executed by one or more processors cause execution of the method steps.

**Brief Description of the Drawings**

Objects, features and advantages of embodiments of the disclosure follow in the detailed description, with reference being made to the accompanying drawings, in which:

FIG. 1A schematically shows a plan view of part of an example warehouse.
FIG. 1B schematically shows an example front view of a rack.
FIG. 1C schematically shows a plan view of the topology of the example warehouse.
FIG. 2 is an example visualisation of a network for a warehouse.
FIG. 3A is an illustration of an example route between items in a warehouse.
FIG. 3B is an illustration of another example route between items in a warehouse.
FIG. 4 is a flow chart of a method for determining a picking route for order items.
FIG. 5 is a flow chart of a method for determining a distance measure between orders.
FIG. 6 shows an example application of the method of FIG. 5.
FIG. 7 is a block diagram illustrating an exemplary computer system.

Like reference numerals refer to like elements throughout the description.

**Detailed Description**

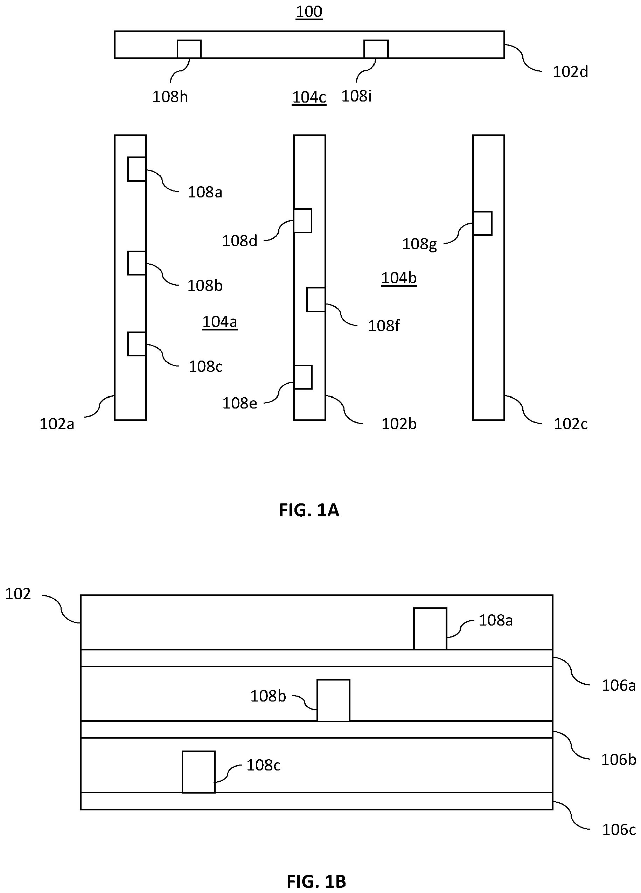

FIG. 1A schematically shows a plan view of part of an example warehouse 100. The warehouse 100 comprises a number of racks 102, where each rack 102 comprises a set of connected shelves (shown in FIG. 1B). The positions of the racks 102 define different aisles 104 of the warehouse 100. An aisle 104 is a physical path next to one or more rack 102, which enable movement around the warehouse 100. A warehouse 100 may also be defined by walls, zones, or other features not shown in FIG. 1A that provide a definition of the geometry and geography of the warehouse 100. Whilst a warehouse 100 is referred to for the rest of this disclosure, it will be appreciated that the methods herein may be applied to any suitable storage facility, such as a storage facility of a shop.

As shown in FIG. 1A, a first aisle 104a is formed between a first rack 102a and a second rack 102b. A second aisle 104b is formed between the second rack 102b and a third rack 102c. A third aisle 104c is formed between the first, second and third racks 102a-c and a fourth rack 102d. It will be appreciated that a warehouse 100 may comprise any suitable number of racks 102 and aisles 104, and in any suitable configuration.

A picker can move around the warehouse 100 via the aisles 104 and pick items from the racks 102. In some embodiments, a picker is a person, for example using a piece of equipment to carry the picked items. For example, the picker may push a cart/trolley or drive a forklift. In some embodiments, a picker is an autonomous vehicle, for example an autonomous cart or forklift, without a human operator.

A number of items 108 may be placed on the racks 102. The items 108 are product items that are picked from the warehouse 100 in order to fulfil orders from customers. The items 108 may also be referred to as stock keeping units (SKUs) or, as will be explained later, order items. As shown in FIG. 1A, first, second, and third items 108a-c are located on the first rack 102a. Third and fourth items 108d-e are located on a left-hand side of the second rack 102b, while a sixth item 108f is located on the right-hand side of the second rack 102b. A seventh item 108g is located on the third rack 102c. Eighth and ninth items 108h-l are located on the fourth rack 108d. It will be appreciated that the items 108 may be arranged in any suitable manner on the racks 102. The locations of the items 108 can be used to define paths between the items 108, as will be discussed below.

Each rack 102 may comprise a number of shelves 106. Whilst the shelves 106 are not shown in the plan view of FIG. 1A, it will be appreciated that the items 108 may be placed on any suitable shelf 106 of a rack 102, and may therefore be located at different vertical heights. FIG. 1B schematically shows an example front view of a rack 102 comprising a number of shelves 106. Whilst three shelves 106a-c are shown in FIG. 1B, it will be appreciated that a rack 102 may comprise any suitable number of shelves 106. It will also be appreciated that a rack 102 may comprise shelves 106 accessible from both sides of the rack 102, i.e. accessible from adjacent aisles 104. Each shelf may store a number of items 108. As shown in FIG. 1B, a first item 108a is located on a first shelf 106a, a second item 108b is located on a second shelf 106b, and a third item 108c is located on a third shelf 106c. It will be appreciated that the items 108 may be arranged in any suitable manner on the shelves 106.

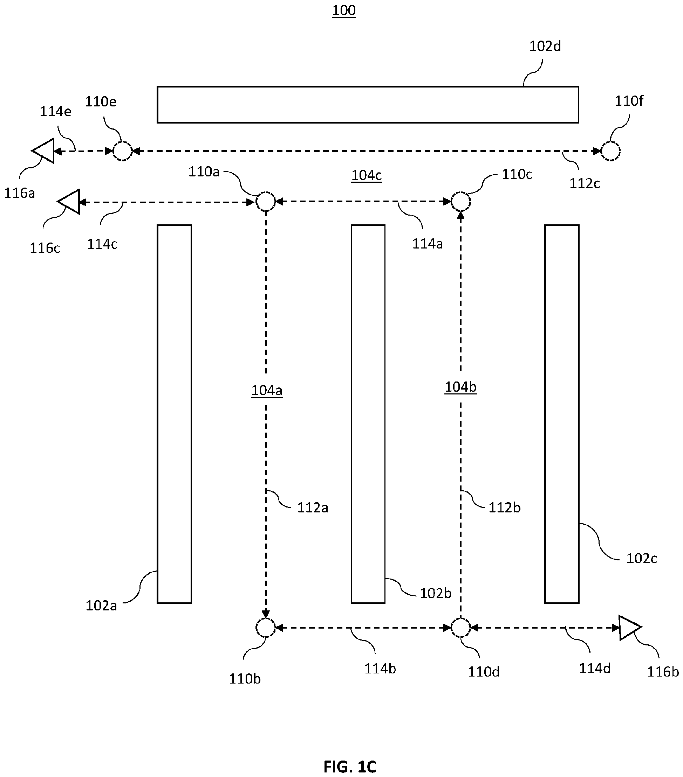

FIG. 1C schematically shows a plan view of the topology of the example warehouse 100 shown in FIG. 1A. The topology may be used to define a mathematical model of the warehouse 100, as will be described later. In particular, each aisle 104 is assigned end points 110 with picking paths 112 between them. Furthermore, connecting paths 114 may be defined between the aisles 104, or between an aisle 104 and another part of the warehouse 100, for example an entrance or exit 116. An end point may be designated as a junction if it is the meeting point between two paths 112, 114. The paths 112, 114 are paths that can be travelled by a picker during a picking process.

As shown in FIG. 1C, the first aisle 104a has a first end point 110a and a second end point 110b. A unidirectional path 112a is defined from the first end point 110a to the second end point 11 0b. This indicates that a picker in the warehouse 100 may only move in the direction from the first end point 110a to the second end point 110b, i.e. aisle 104a is a one-way aisle. It will be appreciated that aisle 104a could be a one-way aisle in the other direction (from the second end point 110b to the first end point 110a) or a two-way aisle. Similarly, the second aisle 104b has a first end point 110c and a second end point 110d, with a unidirectional path 112b defined from the second end point 110d to the first end point 110c. The third aisle 104c has a first end point 110e and a second end point 110f, with a bidirectional path 112c defined between the first end point 110e and the second end point 110f. As such, the third aisle 104c is a two-way aisle. It will be appreciated that the directionality of the aisles 104 may be determined based on a number of factors associated with the planning and operation of the warehouse 100.

Connecting paths 114 may also be provided between aisles 104 and other parts of the warehouse 100, for example entrances or exits where items can be transferred to or from a delivery vehicle. For example, as shown in FIG. 1C, a bidirectional connecting path 114a is defined between the first end point 110a of the first aisle 104a and the first end point 110c of the second aisle 104b. Similarly, a bidirectional connecting path 114b is defined between the second end point 110b of the first aisle 104a and second end point 110d of the second aisle 104b. These paths allow a picker to move between the aisles 104 during a picking process. Connecting paths 114 may also be provided between an aisle 104 and another part of the warehouse 100. For example, as shown in FIG. 1C, a bidirectional connecting path 114c is defined from the first end point 110a of the first aisle 104a to another part of the warehouse 100, in particular entrance/exit 116a. A bidirectional connecting path 114d is defined from the second end point 110d of the second aisle 104b to another part of the warehouse 100, in particular entrance/exit 116b. A bidirectional connecting path 114e is defined from the first end point 110e of the third aisle 104c to another part of the warehouse 100, in particular entrance/exit 116a. It is noted that entrance/exit 116a and entrance/exit 116c may be the same entrance/exit.

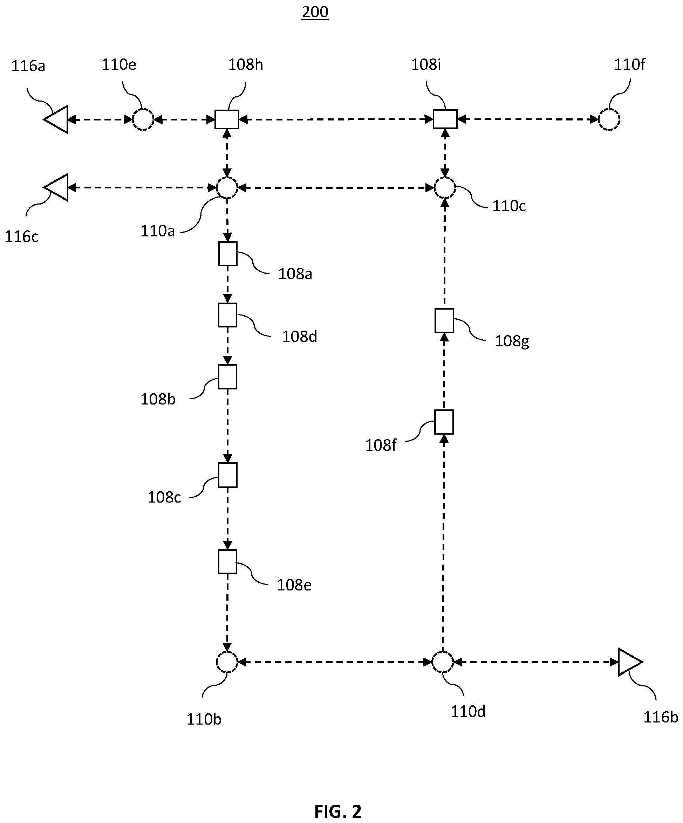

It is noted that paths 112, 114 that define substantially the same position and direction can be considered as a single path in order to simplify the representation of the warehouse 100. For example, as the picking path 112c, and the connecting paths 114a, 114c and 114e are all bidirectional and all lie in the third aisle 104c, they could be combined into a single or contiguous path. This will be explained in more detail in relation to FIG. 2.

Based on the information shown in FIGs. 1A to 1C, it is possible to generate a network representing the warehouse 100. The network could be generated, for example, using a computer aided design model of the warehouse 100. For example, the locations of the items 108, end points 110, and entrances/exits 116 can be defined as nodes in the network. It is noted that the locations of the items 108 may include the height of the shelf 106 on which the item 108 is located. The directional paths 112, 114 can be used to define links between adjacent nodes (i.e. consecutive nodes along a given path). The links may be assigned a direction in line with the directional restraints of the paths 112, 114. Each link representing a picking path 112 may also include a designation of which other picking paths it is connected to 112. In some embodiments, links may only be created between nodes that are considered active. For example, if a particular shelf 106 only contains items 108 that are not part of a current set of orders, nodes on that shelf may be omitted from the model. In other embodiments, links may be formed between all nodes in the warehouse 100. The links may represent the paths 112, 114 that can be travelled by a picker between the nodes during a picking process, or may represent a shortest distance between the nodes. In some examples, the links represent the shortest path that can be travelled by a picker between the nodes.

An example visualisation of a network 200 for the warehouse 100 shown in FIGs. 1A to 1C is shown in FIG. 2. As can be seen in FIG. 2, the information present in in FIGs. 1A to 1C is consolidated into a more simple representation. In some embodiments, all items 108 that are accessible from a single aisle 104 are represented along a single path, regardless of which rack 102 they are located on. This is because a picker can access items 108 on both sides of an aisle 104 when on a picking route. For example, as shown in FIG. 2, all items 108a-e are shown along a single path, as they are all accessible from aisle 104a. In some embodiments, each rack 102 in an aisle 104 may be considered as part of the network 200, such that each item 108 is associated with a particular rack 102, even if the racks 102 are then associated with the same aisle 104. It will be appreciated that, in some embodiments, an item 108 may be accessible from both sides of the rack 102, i.e. accessible from adjacent aisles 104, and that the network 200 can reflect this. For example, the network may represent items 108d-f in both aisle 104a and aisle 104b. The provision of a network that takes into account directional paths enables a solution to be provided regardless of the topology in the warehouse, i.e. it is possible to determine a solution regardless of how the shelves are set up: orthogonally, horizontally, obliquely, and/or a combination of these.

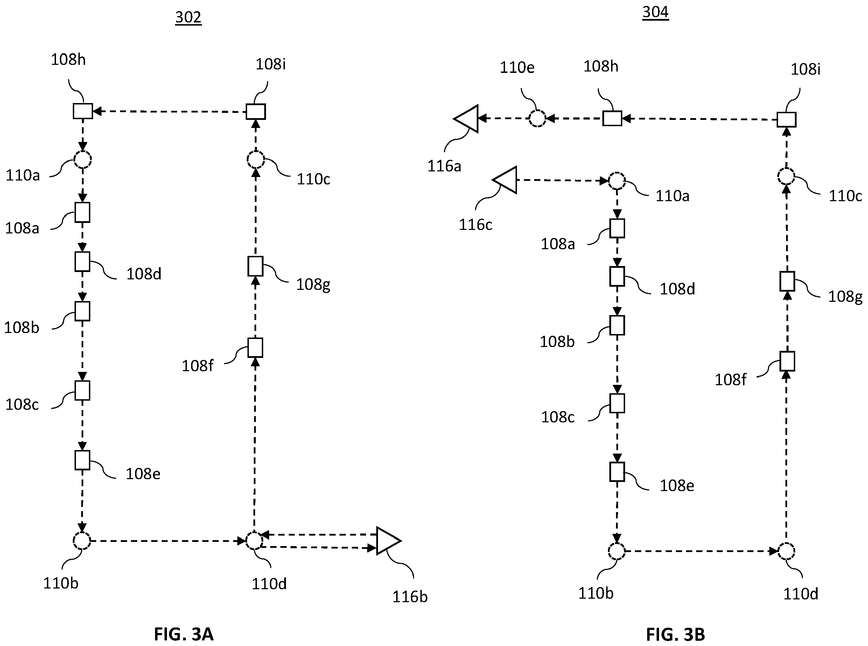

Based on the network 200, possible routes between the different items 108 may be determined. FIGs. 3A and 3B show example routes between all items 108a-i. Each route 302, 304 satisfies the topological restrictions of the warehouse 100. A first route 302 starts at entrance 116b before heading to the sixth item 108f and passing all remaining items before exiting at again at 116b. There are several reasons why this may not be an optimal route. For example, a more efficient route may be found that reduces the travel time, for example by picking the items 108 in a different order. A second route 304 passes all items 108a-i in a different order, starting from entrance 116c, before heading to the first item 108a and passing all remaining items before exiting at 116a. The second route 304 is shorter than the first route 302, and may therefore be considered an improvement. In some embodiments, a visualisation of the warehouse 100 and/or the network 200 can be provided to a user along with visual representations of the candidate routes 302, 304. The visualisation of a route may also include an indication of parameters of the route, such as costs associated with the route as discussed below. In this way, the picking of a set of orders can be visually simulated and evaluated by a user.

It will be appreciated that a large number of routes that pass all items 108 and satisfy the topological restrictions of the warehouse 100 are possible. It is a significant computational undertaking to consider all possible routes, especially in instances where the number of items in an order is particularly large. Furthermore, in certain circumstances, not all items 108a-i should be picked together. For example, one or more orders from one or more customers may only require a subset of the items to be picked. Therefore, a method is required to take into account these various restrictions and provide the most efficient picking route to satisfy a number of orders.

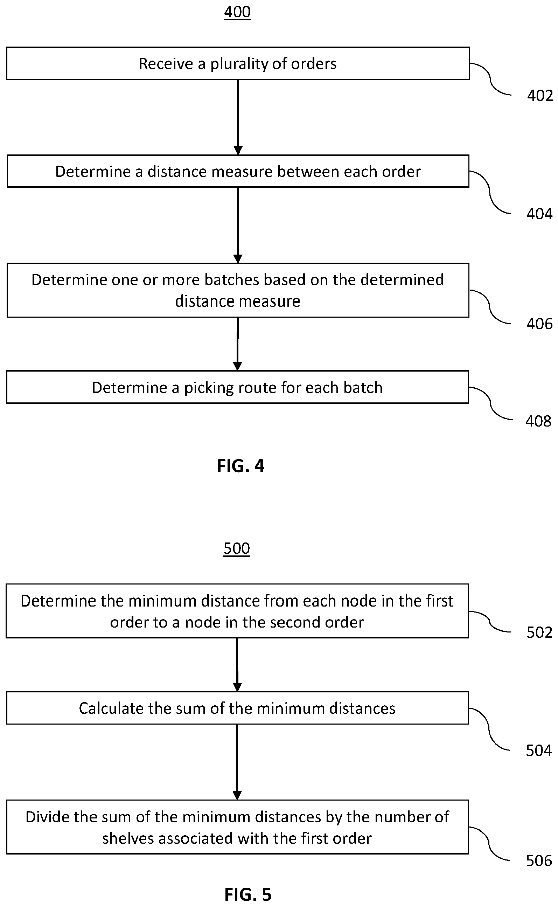

FIG. 4 is a flow chart illustrating a method 400 for determining a picking route for order items. The method 400 is a computer-implemented method. The method 400 enables an advantageous set of picking routes for a number of orders to be determined in a computationally efficient manner.

At step 402, a plurality of orders are received. Each order comprises a number of order items. Orders may come from customers and describe what is to be picked and when. As discussed above, order items (or SKUs) correspond to the items 108 located in the warehouse 100. Each order may comprise one or more order lines that describe which order items are to be picked, the quantity to be picked, and where in the warehouse 100 they are located. The orders may also include information about the order items themselves, such as the weight, volume, or other properties of an instance of the order item.

After the orders are received, a clustering step can be performed on the orders. In particular, the orders received at step 402 can be divided into clusters, and the following steps of the method 400 can be performed on each cluster. This can improve the computational efficiency of the method 400. The clustering operation can be performed based on factors associated with the orders themselves. For example, the orders can be clustered based on a time window (e.g. orders to be delivered with the same delivery vehicle), and the distribution of order items in the warehouse (e.g. using the distance measure between orders discussed below). Orders that are close to each other temporally and geographically thus end up in the same cluster and can potentially be picked together in a route. Orders that are far apart in terms of time and distance thus end up in different clusters, which makes it less likely that they will end up in the same route. The size of the clusters (i.e. the number of orders and order lines in a cluster) can have a large impact on the execution time. Small clusters with few orders make the solution faster, but larger clusters can provide potentially better solutions. A balance between these factors can be selected by a user.

At step 404, a distance measure is determined between each of the received orders. Orders that are closer to each other are generally more efficient to pick in the same route. The distance measure describes a distance between one order and the next, and therefore allows orders that are closer to each other to be identified in a unique manner.

The distance measure can be determined in a number of different ways. For example, a distance between the final item in a first order and the first item in a second order may be determined. In another example, a distance may be a function of the number of aisles required to reach items in a first order from items in a second order.

In one advantageous embodiment, determining the distance measure between two orders can be performed based on a network representing the warehouse 100. The network may be generated in the same manner as the network 200 described in relation to FIG. 2. In particular, a plurality of nodes are generated representing locations of order items 108 in the warehouse 100. Each node corresponds to a shelf 106 in the warehouse 100 (i.e. the location of a respective order item 108). Other nodes may also be generated in the network, for example representing end points 110 and entrances/exits 116 as well as depot. Directional links are then generated between each node, which describe a path and a direction in which a picker can travel between the various nodes. The network 200 may also be used to determine an optimal picking sequence for each individual order.

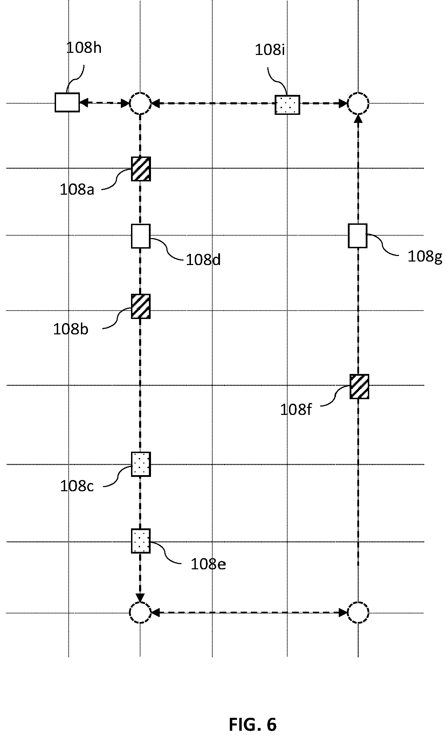

Determining the distance measure between two orders based on the network can be performed according to the method 500 shown in FIG. 5. The method 500 applies an adapted version of Dijkstra's algorithm. An example application of the method 500 can be explained in relation to FIG. 6, where the network 200 shown in FIG. 2 is illustrated, with grid lines added for ease of explanation.

At step 502 of the method 500, the minimum distance from each node in a first order to a node in a second order is determined. That is to say, the distance between each node in the first order and its respective closest node in the second order is determined. The minimum distance may be determined based on the directional links generated in the mathematical model. As such, it can be said that the distance is determined according to the definition of Manhattan Distance (rectilinear distance), as known in the art. In some embodiments, a Dijkstra approach may be used in which the distance from each node in the first order to each node in the second order is calculated, and a Dijkstra matrix is created where each cell in the matrix contains the distance between two orders.

Referring to FIG. 6, let each grid line be spaced apart from an adjacent gridline by a unit of 1. In this case, there are three orders: Order 1, consisting of items 108a, 108b, and 108f (shown by hatched nodes), Order 2, consisting of items 108c, 108e, and 108i (shown by dotted nodes), and Order 3, consisting of items 108d, 108g, and 108h (shown by plain nodes).

It is desired to determine which of Orders 2 and 3 is closest to Order 1, As discussed above, the minimum distance from each node in a first order to a node in a second order is determined according to the Manhattan Distance and in line with the directional links. Therefore, the minimum distances from each node in Order 2 to a node in Order 1 are as follows:

- 108c: 8 units to item 108f

- 108e: 7 units to item 108f

- 108i: 3 units to item 108a

The minimum distances from each node in Order 3 to a node in Order 1 are as follows:

- 108d: 1 unit to 108b

- 108g: 6 units to 108a

- 108h: 2 units to 108a

At step 504, the sum of the minimum distances is determined. Taking the example shown in FIG. 6, the sum of the minimum distances from each node in Order 2 to a node in Order 1 is 18, and the sum of the minimum distances from each node in Order 3 to a node in Order 1 is 9.

At step 506, the sum of the minimum distances is divided by the number of shelves 106 associated with the relevant order to determine the distance measure. For the purposes of the calculation, the height of an item 108 on a rack 102 is not taken into account (i.e. it is assumed that each rack 102 has a single shelf 106). However, it may be the case that items in one rack 102 are located on different shelves 106. This information can be included in the network 200, as discussed above.

Taking the example shown in FIG. 6, the number of shelves associated with Order 2 is 2, and so the distance measure is 9 (18/2). The number of shelves associated with Order 3 is 3, and so the distance measure is 3 (9/3). Therefore, Order 3 is considered the closest to Order 1 (as 3 is less than 9). The distance measures can be used to organise the orders into batches, as will be discussed below.

The method 500 can be performed for all orders that are received in step 402 of the method 400. In this way, a matrix can be generated that contains a distance measure between all orders.

The distance measure determined in the method 500 can be expressed mathematically as follows. Let $O_k$ and $O_l$ denote two orders, where $O_k = \{e_1, e_2, ..., e_n\}$ and $O_l = \{u_1, u_2, ..., u_m\}$ where $e_1$ and $u_1$ are order lines in each order. Let $S_{Ok}$ and $S_{Ol}$ denote the number of shelves in each order, where $S_{Ok} = \{h_1, h_2, ..., h_p\}$ and $S_{Ol} = \{s_1, s_2, ..., s_q\}$. We can then define the distance measure $A(O_k, O_l)$ between orders $O_k$ and $O_l$ as follows:

$$A(O_k, O_l) = \frac{1}{|H_{O_k}|} \sum_{h_i \in H_{O_k}} min\{A(h_i, s_j) | s_j \in H_{O_l}\}, i = 1, 2, 3, ... p \text{ and } j = 1, 2, 3, ..., q$$

where $A(h_i, u_j)$ is the distance between shelves $h_i$ and $u_j$. Note that the distance $A(O_k, O_l)$ is not necessarily the same as the distance $A(O_l, O_k)$ due to the directionality of the links in the network.

Returning to FIG. 4, at step 406, one or more batches are determined based on the distance measure determined at step 404. Each batch comprises two or more orders. In this way, orders that are closer together can be identified and included in the same batch.

To do this, a batch can be initialised with a first order, and a cost associated with the batch can be determined. The cost associated with the batch is determined based on factors associated with the order itself, for example a time window, geographical location in the warehouse, capacity of resources (quantity, weight, volume), etc. The cost associated with the batch is also determined based on factors associated with picking the order, such as a fixed cost for the picker, a moving cost that is based on how long the batch is, a fixed cost for the delivery vehicle, and an ongoing cost for using the delivery vehicle. How these costs can be determined will be understood by the person skilled in the art.

Further orders can then be added to the batch. This can be done based on the distance measure determined at step 404. In particular, the order having the shortest distance to the order already in the batch is selected. In the case that a plurality of orders are already in the batch, the average distance between the orders in the batch and each candidate order is calculated. That is to say, the distance between each order in the batch and a candidate order is determined, and an average is taken. This is then performed for all candidate orders. The candidate order having the shortest average distance is then selected.

The cost associated with the batch including the selected candidate order is then recalculated. If the cost associated with the new composition of the batch is below a threshold and meets one or more constraints, then the selected candidate order is added to the batch. If the addition of the selected candidate order (initially, the order having the shortest distance to the batch) increases the cost of the batch beyond the threshold or constraints, then the order having the next shortest distance to the batch may be selected instead. Orders can be added to a batch until the cost reaches a threshold or another constraint is met. For example, the size of the batch may be limited by the maximum weight or (quantity, weight, or volume) capacity for picking equipment, and/or a maximum time for picking the batch. It may also be defined that all order lines belonging to an order must be picked in the same route and in the same box, and/or that each box may contain a maximum of one order.

This process can be performed either in a sequential manner or in a parallel manner. A sequential approach determines one batch at a time, whereas a parallel approach considers all batches simultaneously and thus evaluates all batches before placing an order in a batch.

This process may result in an initial solution for the batches when all orders have been assigned to a batch. Each batch is assigned a start time and an end time for the picking process. The start and end times may be dependent on when the relevant orders were received and the latest time at which they must be picked. Picking routes for the batches may then be determined, as described in relation to step 408.

In some embodiments, the initial solution may first be improved further through the use of one or more metaheuristics. To this end, the initial solution can be considered as a first set of batches, and second set of batches can be determined by applying at least one metaheuristic to the first set of batches. The result is an improved set of batches each consisting of one or more orders. Example metaheuristics are known in the art, and are summarised briefly below.

A first metaheuristic that can be applied to the initial solution is simulated annealing (SA). SA is a method for approximating global optima given a function. Unlike many other methods and heuristics, SA allows worse solutions to be accepted, which enables the search of a larger solution area and the possibility of moving away from local optima. An SA algorithm takes the batches from the initial solution produced and aims to reduce the number of batches and the associated costs. This is done through functions in an outer and an inner loop. The outer loop takes the algorithm to a search area, where a number of core functions (local search functions) in the inner loop are iterated to improve the solution within that area. If no acceptable solution is found, the outer loop gives a new search area where the inner loop is then repeated. At the beginning of each optimisation, an initial temperature is determined which decreases at each iteration. The rate at which the temperature drops is determined by a parameter. The number of iterations for the algorithm can be set by a user.

Different solutions are generated by performing operations on the batches (for example, moving orders between different batches, splitting batches, merging batches, and remove batches). Whether an operation is considered good or bad is determined based on the cost: if the total cost of a batch is reduced, the operation will be carried out. If the operation increases the total cost, it may still be carried out if the increase is less than a certain value (e.g. a solution that is 30% more expensive than the current solution may be considered acceptable), otherwise the operation is rejected. Which solutions should be accepted by the algorithm and which should be rejected is governed by a formula based on probability. The formula is based on the difference between the current target function value and a new target function value as well as the temperature. As the temperature drops the longer the program runs, the probability of accepting worse solutions also decreases. The formula also ensures that a smaller difference to the target solution is more likely to be accepted than a larger difference.

A second metaheuristic that can be applied to the initial solution is a greedy randomized adaptive search procedure (GRASP). GRASP develops and improves solutions iteratively in an outer and an inner loop. GRASP also works with all orders and batches at the same time. The number of iterations for the algorithm can be set by a user.

In some embodiments, these metaheuristics can be combined. For example, the first set of batches of the initial solution can be applied to an SA algorithm to provide a second set of batches, and the second set of batches can be applied to a GRASP algorithm to provide a third set of batches. Alternatively, the first set of batches of the initial solution can be applied to a GRASP algorithm to provide a second set of batches, and the second set of batches can be applied to an SA algorithm to provide a third set of batches. This leverages the advantages of both metaheuristics.

Returning to FIG. 4, at step 408, a picking route is determined for each batch determined in step 406 based on parameters of the order items in the batch. In particular, each batch determined in step 406 comprise of a number of order lines, which must now be arranged in an optimal order to form a picking route. The order is determined such that the total picking time (travelled distance) for the batch is minimized.

The picking route for a batch can be determined in any suitable manner known in the art. In some embodiments, the picking route is determined by solving a sequence problem. As the constraints on the solution have been taken care of in steps 404 and 406, all that needs to be done in step 408 is to generate the best sequence of order items to be picked for each batch. This is performed based on parameters of the specific order items in the batch, for example the locations of the respective order lines/items, the number and location of the unique shelves that must be visited, etc.

This can be achieved using heuristics developed for a Minimum Spanning Tree (MST) approach or a Travelling Salesman Problem (TSP) approach. A MST approach takes a graph consisting of all nodes and links connecting them, and determines a tree that is a subset of the graph with the least possible number of links. A TSP approach functions by determining the shortest possible route from a starting point to all other nodes based on graph with nodes and links.

The result is a set of batches with a respective set of picking routes. If a clustering operation was performed on the received orders, the solutions for each cluster can be combined into a single solution that is returned as the solution to the whole problem.

Once a picking route has been determined for all batches, the routes may be sorted in order of priority according to which routes should be picked first. This can be achieved by setting a "latest pick up time" for each route, which depends on the orders in that route (all orders may have a latest pick up time). The order in a route having the earliest latest pick up time sets the latest pick up time for the entire route. For example, if a route consists of three orders with latest pick up times of 1.00 p.m., 2.00 p.m. and 3.00 p.m., the route's latest pick up time will then be 1.00 p.m. This can be performed for all routes, which can then be prioritised based on their latest pick up times (the route with the earliest latest pick-up time having the highest priority). The sorting can be further refined by sorting all routes with the same latest pick up time according to additional criteria (for example the size of the order).

The result is thus a queue of picking routes that minimize total movement and use of resources, while respecting delivery requirements and load requirements.

The method 400 is capable of providing a set of picking routes for a number of order batches. The method takes consideration of which orders should be picked together as the batches are determined based on a distance measure between orders, as well as factors associated with the orders themselves. Beyond this, the method 400 enables the provision of solutions in a computationally efficient manner, even with complex networks and large problems, as there is no requirement to optimise routes for individual orders. This is particularly advantageous when the number of orders that must be considered is large, e.g. of the order of 10,000. Current warehouse picking strategies attempt to determine an optimal picking route by filing it with orders sequentially and then optimising. Whilst this may initially find an advantageous picking route, later solutions may be less optimal, and determining routes requires significant computational power. Furthermore, the provision of a network that takes into account directional paths and can determine a measure of the distances between all possible pairs of orders in an advantageous manner enables a solution to be provided regardless of the topology in the warehouse.

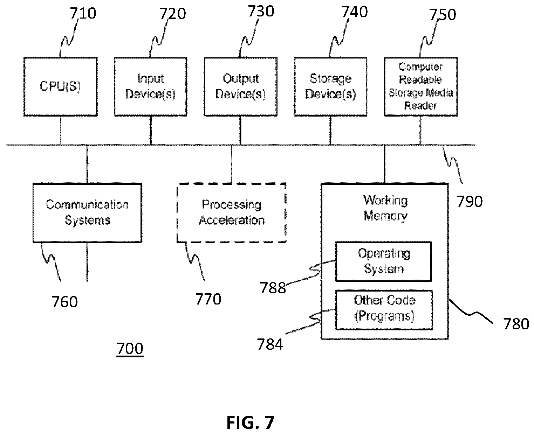

FIG. 7 is a block diagram illustrating an exemplary computer system 700 in which embodiments of the present disclosure may be implemented. This example illustrates a computer system 700 such as may be used, in whole, in part, or with various modifications, to provide the functions of the disclosed system. For example, various functions may be controlled by the computer system 700, including, merely by way of example, generating, determining, receiving, calculating, etc.

The computer system 700 is shown comprising hardware elements that may be electrically coupled via a bus 790. The hardware elements may include one or more central processing units 710, one or more input devices 720 (e.g., a mouse, a keyboard, etc.), and one or more output devices 730 (e.g., a display device, a printer, etc.). The computer system 700 may also include one or more storage devices 740. By way of example, the storage devices 740 may be disk drives, optical storage devices, solid-state storage device such as a random-access memory ("RAM") and/or a read-only memory ("ROM"), which can be programmable, flash-updateable and/or the like.

The computer system 700 may additionally include a computer-readable storage media reader 750, a communications system 760 (e.g., a modem, a network card (wireless or wired), an infrared communication device, Bluetooth™ device, cellular communication device, etc.), and a working memory 780, which may include RAM and ROM devices as described above. In some embodiments, the computer system 700 may also include a processing acceleration unit 770, which can include a digital signal processor, a special-purpose processor and/or the like.

The computer-readable storage media reader 750 can further be connected to a computer-readable storage medium, together (and, optionally, in combination with the storage devices 740) comprehensively representing remote, local, fixed, and/or removable storage devices plus storage media for temporarily and/or more permanently containing computer-readable information. The communications system 760 may permit data to be exchanged with a network, system, computer and/or other component described above.

The computer system 700 may also comprise software elements, shown as being currently located within the working memory 780, including an operating system 788 and/or other code 784. It should be appreciated that alternative embodiments of a computer system 700 may have numerous variations from that described above. For example, customised hardware might also be used and/or particular elements might be implemented in hardware, software (including portable software, such as applets), or both. Furthermore, connection to other computing devices such as network input/output and data acquisition devices may also occur.

Software of the computer system 700 may include code 784 for implementing any or all of the function of the various elements of the architecture as described herein. For example, software, stored on and/or executed by a computer system such as the system 700, can provide the functions of the disclosed system. Methods implementable by software on some of these components have been discussed above in more detail.

Also disclosed are examples according to the following clauses:

1. A computer-implemented method (400) for determining a picking route for order items, comprising:

receiving a plurality of orders, each order comprising one or more order items (108);
determining a distance measure between each order;
determining one or more batches based on the determined distance measure, each batch comprising two or more orders; and
determining a picking route for each batch based on parameters of the order items (108) in the batch.

2. The computer-implemented method (400) of clause 1, wherein determining a distance measure comprises:

generating a network (200) representing the locations of order items (108); and
determining the distance measure between orders based on the network (200).

3. The computer-implemented method (400) of clause 2, wherein generating the network (200) comprises:

generating a plurality of nodes representing locations of order items (108), each node corresponding to a shelf; and
generating directional links between each node.

4. The computer-implemented method (400) of clause 3, wherein determining the distance measure comprises, for each pair of orders comprising a first order and a second order:

determining the minimum distance from each node in the first order to a node in the second order based on the generated directional links;
calculating the sum of the minimum distances; and
dividing the sum of the minimum distances by the number of shelves associated with the first order.

5. The computer-implemented method (400) of any of clauses 2 to 4, further comprising determining an optimal picking sequence for each order based on the network (200).

6. The computer-implemented method (400) of any preceding clause, wherein determining a batch comprises:

selecting an order to be added to the batch; and
determining a cost associated with adding the order to the batch.

7. The computer-implemented method (400) of clause 6, wherein the cost is determined based on a cost of each order in the batch and a cost for picking the batch.

8. The computer-implemented method (400) of clause 6 or 7, comprising adding one or more orders to each batch until the cost of the batch reaches a threshold.

9. The computer-implemented method (400) of any of clauses 6 to 8, comprising adding one or more orders to each batch until the maximum weight or capacity for picking equipment and/or a maximum time for picking the batch is reached.

10. The computer-implemented method (400) of any of clauses 6 to 9, comprising adding an order to a batch in a sequential manner or in a parallel manner.

11. The computer-implemented method (400) of any preceding clause, comprising:

determining one or more first batches based on the determined distance measure;
determining one or more second batches based on the one or more first batches using at least one metaheuristic; and
determining a picking route for each second batch based on parameters of the order items in the batch.

12. The computer-implemented method (400) of clause 11, wherein the at least one metaheuristic comprises a simulated annealing algorithm and/or a greedy randomized adaptive search procedure.

13. The computer-implemented method (400) of clause 11 or 12, wherein determining one or more second batches based on the one or more first batches using at least one metaheuristic comprises adding or removing one or more orders from a batch based on a cost associated with the batch.

14. The computer-implemented method (400) of any preceding clause, wherein determining a picking route for each batch comprises solving a sequence problem, for example a Minimum Spanning Tree or a Travelling Salesman Problem.

15. A computer-readable medium having stored thereon instructions that, when executed by one or more processors cause execution of the method steps according to any of clauses 1 to 14.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer-implemented method (400) for determining a picking route for order items, comprising:

receiving (402) a plurality of orders, each order comprising one or more order items (108);
generating a network (200) representing the locations of order items (108) by generating a plurality of nodes representing locations of order items (108), each node corresponding to a shelf (106), and generating directional links between each node;
determining (404) a distance measure between each pair of orders based on the network (200);
determining (406) one or more batches based on the determined distance measure, each batch comprising two or more orders; and
determining (408) a picking route for each batch based on parameters of the order items (108) in the batch.

2. The computer-implemented method (400) of claim 1, wherein a directional link between a pair of nodes represents a path that can be travelled by a picker between the pair of nodes.

3. The computer-implemented method (400) of claim 1 or 2, wherein determining the distance measure comprises, for each pair of orders comprising a first order and a second order:

   determining (502) the minimum distance from each node in the first order to a node in the second order based on the generated directional links;
   calculating (504) the sum of the minimum distances; and
   dividing (506) the sum of the minimum distances by the number of shelves associated with the first order.

4. The computer-implemented method (400) of any preceding claim, further comprising determining an optimal picking sequence for each order based on the network (200).

5. The computer-implemented method (400) of any preceding claim, wherein determining a batch comprises:

   selecting an order to be added to the batch; and
   determining a cost associated with adding the order to the batch.

6. The computer-implemented method (400) of claim 5, wherein the cost is determined based on a cost of each order in the batch and a cost for picking the batch.

7. The computer-implemented method (400) of claim 5 or 6, comprising adding one or more orders to each batch until the cost of the batch reaches a threshold.

8. The computer-implemented method (400) of any of claims 5 to 7, comprising adding one or more orders to each batch until the maximum weight or volume capacity for picking equipment and/or a maximum time for picking the batch is reached.

9. The computer-implemented method (400) of any of claims 5 to 8, comprising adding an order to a batch in a sequential manner or in a parallel manner.

10. The computer-implemented method (400) of any preceding claim, comprising:

    determining one or more first batches based on the determined distance measure;
    determining one or more second batches based on the one or more first batches using at least one metaheuristic; and
    determining a picking route for each second batch based on parameters of the order items in the batch.

11. The computer-implemented method (400) of claim 10, wherein the at least one metaheuristic comprises a simulated annealing algorithm and/or a greedy randomized adaptive search procedure.

12. The computer-implemented method (400) of claim 10 or 11, wherein determining one or more second batches based on the one or more first batches using at least one metaheuristic comprises adding or removing one or more orders from a batch based on a cost associated with the batch.

13. The computer-implemented method (400) of any preceding claim, wherein determining a picking route for each batch comprises solving a sequence problem, for example a Minimum Spanning Tree or a Travelling Salesman Problem.

14. A computer-implemented method (400) for determining a picking route for order items, comprising:

    receiving (402) a plurality of orders, each order comprising one or more order items (108);
    determining (404) a distance measure between each order;
    determining one or more first batches based on the determined distance measure;

determining one or more second batches based on the one or more first batches using at least one metaheuristic; and

determining (408) a picking route for each second batch based on parameters of the order items (108) in the batch.

15. A computer-readable medium having stored thereon instructions that, when executed by one or more processors cause execution of the method steps according to any of claims 1 to 14.

**FIG. 1A**

**FIG. 1B**

FIG. 1C

FIG. 2

304

FIG. 3B

302

FIG. 3A

<u>400</u>

Receive a plurality of orders — 402

Determine a distance measure between each order — 404

Determine one or more batches based on the determined distance measure — 406

Determine a picking route for each batch — 408

**FIG. 4**

<u>500</u>

Determine the minimum distance from each node in the first order to a node in the second order — 502

Calculate the sum of the minimum distances — 504

Divide the sum of the minimum distances by the number of shelves associated with the first order — 506

**FIG. 5**

108h

108i

108a

108d

108b

108g

108f

108c

108e

FIG. 6

FIG. 7

## EUROPEAN SEARCH REPORT

**Application Number**

EP 24 16 2774

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/218311 A1 (KUMAR ASHWIN [IN] ET AL) 2 August 2018 (2018-08-02) <br> * paragraph [0006] - paragraph [0077]; figures 5,6,7 * <br> * paragraph [0024] * <br> * paragraphs [0009], [0028], [0038] * <br> * paragraph [0059] - paragraph [0062] * <br> * paragraph [0062] - paragraph [0076] * <br> ----- | 1-15 | INV. <br> G06Q10/00 <br> G06Q10/047 <br> G06Q10/08 <br> G06Q10/087 <br> G06Q10/0875 |
| X | US 2018/330316 A1 (RAJKHOWA PRATOSH DEEPAK [IN] ET AL) 15 November 2018 (2018-11-15) | 1,2, 4-12,14, 15 | |
| A | * paragraph [0012] - paragraph [0048] * <br> * paragraph [0012] - paragraph [0013] * <br> * paragraph [0035] - paragraph [0037] * <br> * paragraph [0048] - paragraph [0050] * <br> * paragraph [0053] - paragraph [0055] * <br> ----- | 3,13 | |

**TECHNICAL FIELDS SEARCHED (IPC)**

G06Q

The present search report has been drawn up for all claims

| Place of search | Date of completion of the search | Examiner |
|---|---|---|
| Munich | 2 August 2024 | Jardak, Christine |

EPO FORM 1503 03.82 (P04C01)

## ANNEX TO THE EUROPEAN SEARCH REPORT
## ON EUROPEAN PATENT APPLICATION NO.

EP 24 16 2774

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2024

| Patent document cited in search report | Publication date | Patent family member(s) | Publication date |
|---|---|---|---|
| US 2018218311 A1 | 02-08-2018 | NONE | |
| US 2018330316 A1 | 15-11-2018 | NONE | |

EPO FORM P0459

For more details about this annex : see Official Journal of the European Patent Office, No. 12/82